# EUROPÄISCHE PATENTSCHRIFT

(11) **EP 1 224 897 B1**
(45) Veröffentlichungstag und Bekanntmachung des Hinweises auf die Patenterteilung: **28.07.2004**
(21) Anmeldenummer: 01127103.8
(22) Anmeldetag: 15.11.2001
(51) Int. Cl.: A47J 39/02, A47G 19/02

(54) **Vorrichtung zum Warm- oder Kalthalten eines Temperierguts**
Device for keeping tempered goods warm or cold
Dispositif et procédé destinés à maintenir les produits tempérés chauds ou froids

(30) Priorität: 21.12.2000 DE 10063891
(43) Veröffentlichungstag der Anmeldung: 24.07.2002
(73) Patentinhaber: BLANCO GmbH + Co KG, 75038 Oberderdingen (DE)
(72) Erfinder: Hajek, Andreas, Dr., 74336 Brackenheim (DE)
(74) Vertreter: Hörner, Andreas

(56) Entgegenhaltungen:
- DE-A- 19 836 048
- DE-A- 19 934 625
- US-A- 4 567 877
- US-A- 4 982 722
- US-A- 5 520 103

## Beschreibung

Die vorliegende Erfindung betrifft eine Vorrichtung zum Warm- oder Kalthalten eines Temperierguts, insbesondere zum Warm- oder Kalthalten von Speisen und/oder Getränken, die einen Wärmespeicherkörper umfaßt.

Passive Warm- oder Kalthaltevorrichtungen dieser Art sind aus dem Stand der Technik bekannt.

Insbesondere sind solche Vorrichtungen bekannt, welche ein Unterteil zum Aufnehmen des Temperierguts, ein (häufig als Cloche bezeichnetes) Oberteil zum Abdecken des Unterteils und einen Wärmespeicherkörper umfassen, wobei der Wärmespeicherkörper als Wärmespeichermaterial ein Gel enthält, welches beispielsweise in das Oberteil der Vorrichtung eingefüllt wird oder in Form einer separaten Gelkompresse in die Vorrichtung eingelegt wird.

Bei diesen bekannten Vorrichtungen ist von Nachteil, daß das als Wärmespeichermaterial eingesetzte Gel aufwendig in der Herstellung und Verarbeitung ist und nur in einem beschränkten Temperaturbereich eingesetzt werden kann, ohne seine chemische Zusammensetzung oder seine physikalische Beschaffenheit zu verändern. Insbesondere dann, wenn der Bereich zulässiger Warmhaltetemperaturen nach oben überschritten wird - beispielsweise durch eine unbeabsichtigt lange Dauer der Erwärmung der Vorrichtung zum Warmhalten in einer externen Erwärmungsvorrichtung - kann es zu einer Schädigung des Gel-Wärmespeichermaterials kommen.

Die US-A-4567877 offenbart eine Vorrichtung zum Warmhalten eines Temperierguts mit einem Wärmespeicherkörper, der aus nassem Sand gebildet ist.

Die DE-A-19836048 offenbart einen Latentwärmespeicher mit einem Latentwärmespeichermaterial auf Paraffinbasis, der als Trägermaterial zum Aufsaugen des Latentwärmespeichermaterials Vliesstoffe aus Fasern aus Mineral- oder keramischen Werkstoffen enthält. Der Latentwärmespeicher enthält ferner ein hygroskopisches Material, in dessen Innerem eine geringe Menge Wasser gespeichert ist. Wird der Latentwärmespeicher einer Mikrowellenstrahlung ausgesetzt, so verdampft das in dem hygroskopischen Material gespeicherte Wasser und überstreicht die Oberflächen von mit dem Latentwärmespeichermaterial auf Paraffinbasis gefüllten Trägermaterialeinzellkörpern, so daß die Wärme von dem dampfförmigen Wasser auf das Wärmespeichermaterial auf Paraffinbasis übertragen wird.

Der vorliegenden Erfindung liegt die Aufgabe zugrunde, eine Vorrichtung der eingangs genannten Art zu schaffen, welche einfach und preisgünstig herzustellen ist.

Diese Aufgabe wird bei einer Vorrichtung mit den Merkmalen des Oberbegriffs von Anspruch 1 erfindungsgemäß dadurch gelöst, daß der Wärmespeicherkörper ein Adsorptionsmaterialin Form eines Vlieses mit einem Adsorptionsvermögen für die Wärmespeicherflüssigkeit von mindestens ungefähr 150 % des Eigengewichts des Vlieses umfaßt.

Bei der erfindungsgemäßen Lösung dient das Adsorptionsmaterial vorwiegend der Formgebung und dem Zusammenhalt des Wärmespeicherkörpers, während die Wärmespeicherfunktion vorwiegend von der in dem Adsorptionsmaterial aufgenommenen Wärmespeicherflüssigkeit übernommen wird.

Durch die Trennung dieser Funktionen wird es möglich, für jede Funktion das jeweils geeignetste Material auszuwählen.

Beim Warmhalten des Temperierguts dient der Wärmespeicherkörper dabei zum Speichern der bei einer Vorerwärmung von außen zugeführten Wärme, um das Abkühlen des Temperierguts nach der Vorerwärmung zu verlangsamen. Beim Kalthalten eines Temperierguts dient der Wärmespeicherkörper zur Aufnahme der nach einer Vorkühlung aus der Umgebung zugeführten Wärme, um das Erwärmen des Temperierguts zu verlangsamen.

Um zu gewährleisten, daß sich der Wärmespeicherkörper dem in der Vorrichtung zum Warm- oder Kalthalten zur Aufnahme des Wärmespeicherkörpers vorgesehenen Raum und der Form des Aufnahmebereichs für das Temperiergut innerhalb der Vorrichtung zum Warm- oder Kalthalten möglichst gut anpassen kann, ist vorzugsweise vorgesehen, daß der Wärmespeicherkörper ein formflexibles Adsorptionsmaterial umfaßt.

Wenn vorteilhafterweise vorgesehen ist, daß der Wärmespeicherkörper ein Adsorptionsmaterial umfaßt, das bis zu einer Temperatur von mindestens ungefähr 200°C, vorzugsweise bis zu einer Temperatur von mindestens ungefähr 550°C, temperaturbeständig ist, so kann hierdurch eine Schädigung des Adsorptionsmaterials bei unbeabsichtigt langer Erwärmung der Vorrichtung in einer externen Erwärmungsvorrichtung vermieden werden.

Aus Sicherheitsgründen ist es von Vorteil, wenn der Wärmespeicherkörper ein Adsorptionsmaterial umfaßt, das nicht brennbar ist.

Um unbedenklich im Lebensmittelbereich zum Warm- oder Kalthalten von Speisen und/oder Getränken eingesetzt werden zu können, ist es günstig, wenn der Wärmespeicherkörper ein Adsorptionsmaterial umfaßt, das im wesentlichen bindemittelfrei ist.

Bei der erfindungsgemäßen Vorrichtung ist vorgesehen, daß der Wärmespeicherkörper ein Adsorptionsmaterial umfaßt, das in Form eines Vlieses vorliegt. Ein solches Vlies stellt ein selbsttragendes Fasergeflecht dar, welches flexibel ist und ein geringes spezifisches Gewicht, zugleich aber ein hohes Adsorptionsvermögen für die Wärmespeicherflüssigkeit aufweist.

Besonders günstig ist es, wenn der Wärmespeicherkörper ein anorganisches Adsorptionsmaterial, vorzugsweise Mineralfasern, insbesondere Silikatfasern, umfaßt. Ein solches Adsorptionsmaterial weist eine hohe Widerstandsfähigkeit gegen externe Einflüsse, insbesondere gegenüber hohen Temperaturen auf, und ist hygienisch unbedenklich, so daß es ohne weiteres im Lebensmittelsektor eingesetzt werden kann.

Um eine besonders hohe Wärmekapazität des Wärmespeicherkörpers zu gewährleisten, ist vorzugsweise vorgesehen, daß der Wärmespeicherkörper ein Adsorptionsmaterial mit einem Adsorptionsvermögen für die Wärmespeicherflüssigkeit von mindestens ungefähr 200 % umfaßt.

Unter einem Adsorptionsvermögen von x % ist dabei die Fähigkeit des Adsorptionsmaterials zu verstehen, mindestens eine Menge der Wärmespeicherflüssigkeit aufzunehmen, deren Gewicht x % des Eigengewichts des Adsorptionsmaterials entspricht.

Als besonders geeignetes Adsorptionsmaterial hat sich ein Silikatfaser-Vlies erwiesen, welches unter der Bezeichnung Multitherm 550 von der Firma Techno-Physik GmbH in Essen zu beziehen ist.

Um den Zusammenhalt des Adsorptionsmaterials zu gewährleisten und zu verhindern, daß die Wärmespeicherflüssigkeit aus dem Wärmespeicherkörper austritt, ist es von Vorteil, wenn der Wärmespeicherkörper eine Umhüllung aus einem fluiddichten Material umfaßt.

Im Hinblick auf eine möglichst unbedenkliche Verwendung im Lebensmittelsektor ist es günstig, wenn die Umhüllung ein halogenfreies Kunststoffmaterial, vorzugsweise Polyethylen, umfaßt.

Zur Art der Wärmespeicherflüssigkeit wurden bislang noch keine näheren Angaben gemacht.

Grundsätzlich kommt als Wärmespeicherflüssigkeit jede Flüssigkeit in Betracht, welche eine ausreichend hohe Wärmespeicherkapazität und eine chemische und physikalische Beständigkeit bei den Betriebstemperaturen der Vorrichtung zum Warm- oder Kalthalten aufweist.

Beispielsweise können ein- oder mehrwertige Alkohole als Wärmespeicherflüssigkeit verwendet werden.

Bei einer bevorzugten Ausgestaltung der erfindungsgemäßen Vorrichtung ist jedoch vorgesehen, daß der Wärmespeicherkörper als Wärmespeicherflüssigkeit Wasser umfaßt.

Wasser ist preisgünstig verfügbar, gegenüber externen Einflüssen beständig und zeigt von allen festen und flüssigen Stoffen die höchste spezifische Wärmekapazität sowie eine sehr hohe spezifische Schmelzwärme bei einer Schmelztemperatur (0°C), welche in dem zum Warm- oder Kalthalten von Speisen und/oder Getränken interessanten Bereich liegt.

Ferner weisen die als Adsorptionsmaterial bevorzugten Silikatfaser-Vliese ein sehr hohes Adsorptionsvermögen für Wasser auf.

Die Verwendung von Wasser als Wärmespeicherflüssigkeit erlaubt es, die erfindungsgemäße Vorrichtung ohne weiteres sowohl zum Kalthalten eines Temperierguts einzusetzen, wobei bei einer Vorkühlung unter den Gefrierpunkt des Wassers die hohe Schmelzwärme von Eis genutzt werden kann, als auch zum Warmhalten eines Temperierguts in dem für Speisen und/oder Getränke besonders interessanten Bereich knapp unterhalb von 100°C.

Ferner ist die Wärmespeicherflüssigkeit Wasser ungefährlich, falls sie aus dem Wärmespeicherkörper austreten sollte.

Grundsätzlich ist denkbar, den Wärmespeicherkörper je nach Bedarf in die Vorrichtung zum Warm- oder Kalthalten einzulegen bzw. daraus zu entnehmen.

Bei einer bevorzugten Ausgestaltung der erfindungsgemäßen Vorrichtung ist jedoch vorgesehen, daß die Vorrichtung einen geschlossenen Behälter zur Aufnahme des Wärmespeicherkörpers umfaßt, so daß der Wärmespeicherkörper besonders vor mechanischen Einwirkungen aus der Umgebung geschützt ist und jederzeit zur Durchführung eines Warm- oder Kalthaltevorgangs zur Verfügung steht.

Um einen guten Wärmeübergang zwischen der Umgebung und dem Wärmespeicherkörper zu gewährleisten, ist es von Vorteil, wenn der Behälter ein metallisches Material, vorzugsweise einen Chromnickelstahl, umfaßt.

Ein solches Material ist auch leicht zu reinigen und daher auch aus hygienischen Gründen vorzuziehen.

Um insbesondere bei einer Änderung des Aggregatzustandes der Wärmespeicherflüssigkeit eine Schädigung des Wärmespeicherkörpers und/oder des Behälters, in welchem der Wärmespeicherkörper aufgenommen ist, zu verhindern, ist es von Vorteil, wenn der Behälter einen Ausweichraum umfaßt, in den sich der Wärmespeicherkörper bei einer Volumenänderung ausdehnen kann.

Insbesondere kann vorgesehen sein, daß der Behälter einen Innenraum des Wärmespeicherkörpers aufweist, welcher einen sich zu einem Rand des Behälters hin verjüngenden Bereich umfaßt.

Um eine Verunreinigung des Wärmespeicherkörpers durch das Temperiergut und umgekehrt eine Verunreinigung des Temperierguts durch Kontakt mit dem Wärmespeicherkörper zu verhindern, ist es von Vorteil, wenn die Vorrichtung eine zwischen dem Wärmespeicherkörper und dem Temperiergut angeordnete Trennwand umfaßt.

Um einen guten Wärmeübergang zwischen dem Wärmespeicherkörper und dem Temperiergut zu gewährleisten, ist es günstig, wenn die Trennwand ein metallisches Material, vorzugsweise einen Chromnickelstahl, umfaßt.

Ein solches Material ist darüber hinaus leicht zu reinigen und daher auch aus hygienischen Gründen vorzuziehen.

Grundsätzlich kann die Vorrichtung zum Warm- oder Kalthalten ein- oder mehrteilig ausgebildet sein.

Bei einer bevorzugten Ausgestaltung der erfindungsgemäßen Vorrichtung ist vorgesehen, daß die Vorrichtung ein erstes Element mit einem Aufnahmebereich zur Aufnahme des Temperierguts und ein zweites Element zum Verschließen des Aufnahmebereichs umfaßt.

Das erste Element zur Aufnahme des Temperierguts kann beispielsweise als Speisen- oder Getränkebehälter ausgebildet sein, und das zweite Element kann als Abdeckung (Cloche) für den Speise- oder Getränkebehälter ausgebildet sein.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen Schnitt durch ein Unterteil einer Vorrichtung zum Warm- oder Kalthalten eines Temperierguts, welches zweischalig aufgebaut ist und einen Wärmespeicherkörper enthält; und
- Fig. 2: einen Schnitt durch ein Oberteil einer Vorrichtung zum Warm- oder Kalthalten eines Temperierguts, welches zweischalig aufgebaut ist und einen Wärmespeicherkörper enthält.

Gleiche oder funktional äquivalente Elemente sind in allen Figuren mit denselben Bezugszeichen bezeichnet.

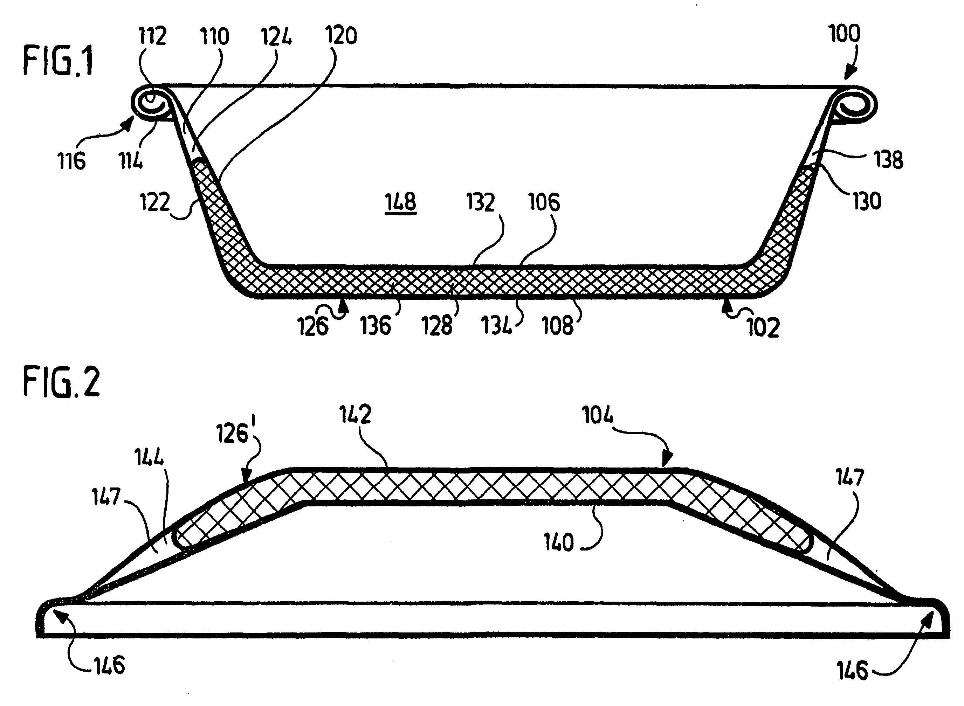

Eine als Ganzes mit 100 bezeichnete Vorrichtung zum Warm- oder Kalthalten eines Temperierguts umfaßt ein in Fig. 1 dargestelltes Unterteil, das als im wesentlichen topfförmiger Speisenbehälter 102 ausgebildet ist, und ein in Fig. 2 dargestelltes, als Cloche 104 ausgebildetes Oberteil, welches als Abdeckung auf das Unterteil aufsetzbar ist.

Wie aus der Schnittdarstellung der Fig. 1 zu ersehen ist, ist der Speisenbehälter 102 zweischalig aufgebaut und umfaßt eine Innenschale 106 und eine Außenschale 108, welche zusammen einen Innenraum 110 des Speisenbehälters 102 umschließen.

Der obere Rand der Außenschale 108 ist zu einer ringförmig geschlossenen Röhre 112 gerollt, und der obere Rand der Innenschale 106 ist ebenfalls zu einer ringförmig geschlossenen Röhre 114 gerollt, welche sich von außen an die Außenseite der von dem oberen Rand der Außenschale 108 gebildeten Röhre 112 anschmiegt und mit dieser zusammen eine torusförmige Auflage 116 für die Cloche 104 bildet.

Die Außenschale 108 und die Innenschale 106 sind somit durch Umbördelung miteinander verbunden.

Die im wesentlichen kegelstumpfmantelförmige Seitenwand 120 der Innenschale 106 und die im wesentlichen kegelstumpfmantelförmige Seitenwand 122 der Außenschale 108 erweitern sich zum oberen Rand des Speisenbehälters 102 hin, wobei die Seitenwand 120 der Innenschale 106 einen größeren Öffnungswinkel als die Seitenwand 122 der Außenschale 108 aufweist, so daß die Seitenwände 120 und 122 zum oberen Rand des Speisenbehälters 102 hin aufeinanderzulaufen und einen sich nach oben hin verjüngenden Seitenwandbereich 124 des Innenraums 110 begrenzen.

In dem Innenraum 110 des Speisenbehälters 102 ist ein Wärmespeicherkörper 126 angeordnet, der ein Adsorptionsmaterial 128 umfaßt, welches in einer fluiddichten Umhüllung 130 angeordnet ist.

Das Adsorptionsmaterial 128 ist mit einer Wärmespeicherflüssigkeit, beispielsweise mit Wasser, getränkt.

Als Adsorptionsmaterial kommt grundsätzlich jedes Material in Betracht, welches ein hohes Adsorptionsvermögen bezüglich der Wärmespeicherflüssigkeit aufweist und das im gesamten Bereich der für den Betrieb der Vorrichtung 100 vorgesehenen Betriebstemperaturen (beispielsweise im Bereich von ungefähr -20°C bis ungefähr 100°C) chemisch und physikalisch beständig ist.

Als besonders günstig hat sich die Verwendung eines Vlieses aus Mineralfasern, insbesondere aus Silikatfasern, erwiesen.

Ein solches Vliesmaterial ist beispielsweise unter der Bezeichnung Multitherm 550 von der Firma Techno-Physik GmbH in Essen zu beziehen.

Dieses Vliesmaterial wird in Form von Platten oder Scheiben geliefert und kann in einfacher Weise auf die benötigte Form und Größe zurechtgeschnitten werden. Aufgrund seiner Flexibilität kann sich das Vliesmaterial an die Form des Innenraums 110 des Speisenbehälters 102 anpassen.

Das genannte Vliesmaterial kann bis zu ungefähr 550 % seines Eigengewichts an Wasser aufnehmen.

Für die Verwendung in dem Wärmespeicherkörper 126 hat es sich als günstig erwiesen, wenn das Adsorptionsmaterial 128 mit einer Wassermenge getränkt wird, welche ungefähr 200 % bis ungefähr 300 % des Eigengewichts des Adsorptionsmaterials entspricht.

Das Faservlies weist eine große spezifische Oberfläche und eine Trockendichte im Bereich von ungefähr 120 kg/m³ bis ungefähr 180 kg/m³ auf.

Das Silikatfaser-Vlies ist ein anorganisches Material und bindemittelfrei, so daß es hygienisch unbedenklich ist und ohne weiteres im Lebensmittelsektor eingesetzt werden kann.

Statt des Silikatfaser-Vlieses könnte auch ein Geflecht aus anderen Mineralfasern, beispielsweise aus Tonmineral-Fasern, als Adsorptionsmaterial 128 verwendet werden.

Auch die Verwendung organischer Adsorptionsmaterialien ist denkbar; als besonders geeignet sind hier Fasergeflechte aus Fasern zu nennen, welche vernetzte Acrylsäurepolymerisate oder Copolymerisate und/oder Polysaccharide wie beispielsweise Stärke, Zellulose oder Pektine umfassen.

Als Wärmespeicherflüssigkeit kommt neben Wasser jede andere Flüssigkeit in Betracht, welche eine ausreichend hohe Wärmespeicherkapazität und eine chemische und physikalische Beständigkeit bei den Betriebstemperaturen der Vorrichtung 100 aufweist.

Alternativ oder ergänzend zu Wasser als Wärmespeicherflüssigkeit kommen insbesondere ein- oder mehrwertige Alkohole in Betracht.

Die Umhüllung 130 des Wärmespeicherkörpers 126 dient dazu, den Zusammenhalt des Adsorptionsmaterials 128 zu gewährleisten und zu verhindern, daß die Wärmespeicherflüssigkeit aus dem Wärmespeicherkörper 126 austritt.

Vorzugsweise wird die Umhüllung 130 aus Polyethylen hergestellt.

Grundsätzlich kommt jedoch auch jedes andere fluiddichte Material in Betracht, das zu einer Umhüllungsfolie verarbeitet werden kann, wie beispielsweise Polyamid, Polyester oder Polyvinylchlorid.

Im Hinblick auf eine möglichst unbedenkliche Verwendung im Lebensmittelsektor werden halogenfreie Kunststoffe als Material für die Umhüllung 130 bevorzugt.

Wie aus Fig. 1 zu ersehen ist, füllt der Wärmespeicherkörper 126 den zwischen dem Boden 132 der Innenschale 106 und dem Boden 134 der Außenschale 108 befindlichen Bodenbereich 136 des Innenraums 110 des Speisenbehälters 102 im wesentlichen vollständig, den Seitenwandbereich 124 des Innenraums 110 jedoch nur teilweise aus.

Dadurch, daß in dem Innenraum 110 über dem Wärmespeicherkörper 126 ein Ausweichraum 138 verbleibt, ist gewährleistet, daß sich der Wärmespeicherkörper 126 bei einer Volumenvergrößerung, beispielsweise bei Gefrieren des in dem Adsorptionsmaterial 128 enthaltenen Wassers, in den Ausweichraum 138 ausdehnen kann, ohne daß es zu einer Beschädigung des Wärmespeicherkörpers 126 und/oder der Innenschale 106 oder der Außenschale 108 kommt.

Die Innenschale 106 und die Außenschale 108 bestehen vorzugsweise aus einem metallischen Material, insbesondere aus einem Chromnickelstahl.

Die in Fig. 2 dargestellte Cloche 104 der Vorrichtung 100 umfaßt ebenfalls eine Innenschale 140 und eine Außenschale 142, welche zusammen einen Innenraum 144 der Cloche 104 umschließen.

Die unteren Ränder der Innenschale 140 und der Außenschale 142 schmiegen sich aneinander an und sind in geeigneter Weise, beispielsweise durch Verschweißung, aneinander festgelegt, um die Außenschale 142 und die Innenschale 140 miteinander zu verbinden und den Innenraum 144 fluiddicht abzuschließen.

Ferner sind die unteren Ränder der Außenschale 142 und der Innenschale 140 nach außen ausgestülpt, um eine Aufnahme 146 für die Auflage 116 am oberen Rand des Speisenbehälters 102 zu bilden, so daß die Cloche 104 möglichst dicht schließend auf den Speisenbehälter 102 aufgesetzt werden kann.

Die Innenschale 140 und die Außenschale 142 bestehen vorzugsweise beide aus einem Kunststoffmaterial, insbesondere aus Polypropylen.

Es wäre aber auch denkbar, eine oder beide dieser Schalen aus einem metallischen Material, beispielsweise aus einem Chromnickelstahl, herzustellen.

Bei Verwendung verschiedener Materialien für die Innenschale 140 und die Außenschale 142 werden diese Schalen vorzugsweise miteinander verklebt.

Im Innenraum 144 der Cloche 104 ist ein weiterer Wärmespeicherkörper 126' angeordnet, welcher hinsichtlich Aufbau und Funktion dem Wärmespeicherkörper 126 im Innenraum 110 des Speisenbehälters 102 entspricht, so daß insoweit auf die vorstehende Beschreibung des Wärmespeicherkörpers 126 Bezug genommen wird.

Der Wärmespeicherkörper 126' füllt den Innenraum 144 der Cloche 104 nicht vollständig aus; vielmehr verbleibt zwischen dem Wärmespeicherkörper 126 und den Begrenzungswänden des Innenraums 144 ein Ausweichraum 147, in den hinein sich der Wärmespeicherkörper 126' bei einer Volumenvergrößerung, insbesondere beim Gefrieren von in dem Wärmespeicherkörper 126' enthaltenem Wasser, ausdehnen kann.

Die vorstehend beschriebene Vorrichtung 100 ist sowohl zum Kalthalten als auch zum Warmhalten eines darin angeordneten Temperierguts geeignet.

Um die Kalthaltefunktion der Vorrichtung 100 zu nutzen, wird eine kaltzuhaltende Speise in den von der Innenschale 106 umgebenen Aufnahmebereich 148 eingebracht, und der Aufnahmebereich 148 wird durch Aufsetzen der Cloche 104 auf den Speisenbehälter 102 verschlossen.

Anschließend wird die gesamte Vorrichtung 100 mit der darin enthaltenen Speise in einer geeigneten Kühlvorrichtung auf eine Anfangstemperatur von beispielsweise -18°C abgekühlt.

Während dieser Kühlphase gefriert das in den Wärmespeicherkörpern 126, 126' enthaltene Wasser, und die hierbei frei werdende latente Wärme wird von der Kühlvorrichtung abgeführt.

Nach Entnahme der Vorrichtung 100 aus der Kühlvorrichtung wird die in dem Aufnahmebereich 148 der Vorrichtung 100 aufgenommene Speise noch über mehrere Stunden hinweg auf einer unter der Umgebungstemperatur liegenden Temperatur gehalten.

Aus der Umgebung aufgenommene Wärme wird zunächst vorwiegend zum Aufschmelzen des in den Wärmespeicherkörpern 126, 126' enthaltenen Eises benutzt.

Durch das flächige Anliegen der Wärmespeicherkörper 126, 126' an der Außenschale 108 bzw. der Außenschale 142 ist ein guter Wärmeübergang aus der jeweiligen Außenschale 108 bzw. 142 in den Wärmespeicherkörper 126 bzw. 126' gewährleistet, so daß jeweils in erster Linie die Wärmespeicherkörper und nicht der Aufnahmebereich 148 der Vorrichtung 100 erwärmt werden.

Experimentelle Untersuchungen haben ergeben, daß die Speisenkerntemperatur in einer erfindungsgemäßen Vorrichtung 100 nach einer Vorkühlung auf eine Temperatur von -18°C nach Ablauf von 240 Minuten nach Beendigung der Kühlung 3°C betrug. In Referenzversuchen mit einer Vorrichtung ohne die Wärmespeicherkörper 126, 126' wurde bei derselben Vorkühltemperatur 240 Minuten nach Ende der Kühlung eine Temperatur von 9°C ermittelt. Hieraus ist deutlich die vorteilhafte Wirkung der Wärmespeicherkörper 126, 126' zu ersehen.

Bei einer Vorkühlung auf eine höhere Vorkühltemperatur von ungefähr 3°C betrug die Speisenkerntemperatur 240 Minuten nach Ende der Kühlung 9°C bei Verwendung der erfindungsgemäßen Vorrichtung 100 und 12°C bei Verwendung einer Vorrichtung ohne die Wärmespeicherkörper 126, 126'.

Um die Warmhaltefunktion der Vorrichtung 100 zu nutzen, wird die warmzuhaltende Speise in den Aufnahmebereich 148 eingebracht und der Aufnahmebereich 148 durch Aufsetzen der Cloche 104 auf den Speisenbehälter 102 verschlossen.

Anschließend wird die Vorrichtung 100 mit der darin angeordneten Speise mittels einer geeigneten Erwärmungsvorrichtung auf eine Temperatur von ungefähr 80°C erwärmt.

Während dieser Erwärmung wird von der Erwärmungsvorrichtung auf die Vorrichtung 100 übertragene Wärme in der Wärmespeicherflüssigkeit und in dem Adsorptionsmaterial 128 der Wärmespeicherkörper 126, 126' gespeichert.

Nach Beendigung der Erwärmung in der Erwärmungsvorrichtung geben die Wärmespeicherkörper 126, 126' diese gespeicherte Wärme an die warmzuhaltende Speise im Aufnahmebereich 148 ab, wodurch sich die Abkühlung der Speise verzögert.

Experimentell wurde bei Verwendung der erfindungsgemäßen Vorrichtung 100 nach Ablauf von 90 Minuten nach Ende der Erwärmung auf ungefähr 80°C eine Speisenkerntemperatur von 65°C ermittelt.

Hingegen wurde in Referenzversuchen mit einer Vorrichtung ohne die Wärmespeicherkörper 126, 126' nach Ablauf von 90 Minuten nach Ende einer Vorerwärmung auf eine höhere Vorerwärmtemperatur von ungefähr 100°C eine Speisenkerntemperatur von 63°C ermittelt.

Die Abkühlrate betrug demnach bei der erfindungsgemäßen Vorrichtung ungefähr 0,16°C/Min., während sie bei der Referenzvorrichtung ohne Wärmespeicherkörper 0,20°C/Min. betrug. Hieraus ergibt sich die Eignung der erfindungsgemäßen Vorrichtung 100 zum Warmhalten von Speisen.

## Patentansprüche

1. Vorrichtung zum Warm- oder Kalthalten eines Temperierguts, insbesondere zum Warm- oder Kalthalten von Speisen und/oder Getränken, umfassend einen Wärmespeicherkörper (126, 126'), der ein Adsorptionsmaterial (128) zur Aufnahme einer Wärmespeicherflüssigkeit umfaßt,
**dadurch gekennzeichnet,**
**daß** der Wärmespeicherkörper (126, 126') ein Adsorptionsmaterial (128) in Form eines Vlieses mit einem Adsorptionsvermögen für die Wärmespeicherflüssigkeit von mindestens 150 % des Eigengewichts des Vlieses umfaßt.

2. Vorrichtung nach Anspruch 1, **dadurch gekennzeichnet, daß** der Wärmespeicherkörper (126, 126') ein formflexibles Adsorptionsmaterial (128) umfaßt.

3. Vorrichtung nach einem der Ansprüche 1 oder 2, **dadurch gekennzeichnet, daß** der Wärmespeicherkörper (126, 126') ein Adsorptionsmaterial (128) umfaßt, das bis zu einer Temperatur von mindestens 200°C, vorzugsweise bis zu einer Temperatur von mindestens 550°C, temperaturbeständig ist.

4. Vorrichtung nach einem der Ansprüche 1 bis 3, **dadurch gekennzeichnet, daß** der Wärmespeicherkörper (126, 126') ein Adsorptionsmaterial (128) umfaßt, das nicht brennbar ist.

5. Vorrichtung nach einem der Ansprüche 1 bis 4, **dadurch gekennzeichnet, daß** der Wärmespeicherkörper (126, 126') ein Adsorptionsmaterial (128) umfaßt, das im wesentlichen bindemittelfrei ist.

6. Vorrichtung nach einem der Ansprüche 1 bis 5, **dadurch gekennzeichnet, daß** der Wärmespeicherkörper (126, 126') ein anorganisches Adsorptionsmaterial, vorzugsweise Mineralfasern, insbesondere Silikatfasern, umfaßt.

7. Vorrichtung nach einem der Ansprüche 1 bis 6, **dadurch gekennzeichnet, daß** der Wärmespeicherkörper (126, 126') ein Adsorptionsmaterial (128) mit einem Adsorptionsvermögen für die Wärmespeicherflüssigkeit von mindestens 200 % des Eigengewichts des Adsorptionsmaterials umfaßt.

8. Vorrichtung nach einem der Ansprüche 1 bis 7, **dadurch gekennzeichnet, daß** der Wärmespeicherkörper (126, 126') eine Umhüllung (130) aus einem fluiddichten Material umfaßt.

9. Vorrichtung nach Anspruch 8, **dadurch gekennzeichnet, daß** die Umhüllung (130) ein halogenfreies Kunststoffmaterial, vorzugsweise Polyethylen, umfaßt.

10. Vorrichtung nach einem der Ansprüche 1 bis 9, **dadurch gekennzeichnet, daß** der Wärmespeicherkörper (126, 126') als Wärmespeicherflüssigkeit Wasser umfaßt.

11. Vorrichtung nach einem der Ansprüche 1 bis 10, **dadurch gekennzeichnet, daß** die Vorrichtung (100) einen geschlossenen Behälter (102, 104) zur Aufnahme des Wärmespeicherkörpers (126, 126') umfaßt.

12. Vorrichtung nach Anspruch 11, **dadurch gekennzeichnet, daß** der Behälter (102) ein metallisches Material, vorzugsweise einen Chromnickelstahl, umfaßt.

13. Vorrichtung nach einem der Ansprüche 11 oder 12, **dadurch gekennzeichnet, daß** der Behälter (102, 104) einen Ausweichraum (138, 147) umfaßt, in den sich der Wärmespeicherkörper (126, 126') bei einer Volumenänderung ausdehnen kann.

14. Vorrichtung nach einem der Ansprüche 11 bis 13, **dadurch gekennzeichnet, daß** der Behälter (102, 104) einen Innenraum (110, 144) zur Aufnahme des Wärmespeicherkörpers (126, 126') aufweist, welcher einen sich zu einem Rand des Behälters hin verjüngenden Bereich (124) umfaßt.

15. Vorrichtung nach einem der Ansprüche 1 bis 14, **dadurch gekennzeichnet, daß** die Vorrichtung (100) eine zwischen dem Wärmespeicherkörper (126, 126') und dem Temperiergut angeordnete Trennwand (106, 140) umfaßt.

16. Vorrichtung nach Anspruch 15, **dadurch gekennzeichnet, daß** die Trennwand ein metallisches Material, vorzugsweise einen Chromnickelstahl, umfaßt.

17. Vorrichtung nach einem der Ansprüche 1 bis 16, **dadurch gekennzeichnet, daß** die Vorrichtung (100) ein erstes Element (102) mit einem Aufnahmebereich (148) zur Aufnahme des Temperierguts und ein zweites Element (104) zum Verschließen des Aufnahmebereichs (148) umfaßt.

## Claims

1. Device for keeping hot or cold a product which is to be kept hot or cold, in particular for keeping food and/or drinks hot or cold, comprising a heat-retaining body (126, 126') which comprises an adsorption material (128) for holding a heat-retaining liquid,
**characterised in**
**that** the heat-retaining body (126, 126') comprises an adsorption material (128) in the form of a fleece with an adsorptive capacity for the heat-retaining liquid of at least 150 % of the self-weight of the fleece.

2. Device according to Claim 1, **characterised in that** the heat-retaining body (126, 126') comprises a dimensionally flexible adsorption material (128).

3. Device according to any one of Claims 1 and 2, **characterised in that** the heat-retaining body (126, 126') comprises an adsorption material (128) which is temperature-resistant up to a temperature of at least 200°C, preferably up to a temperature of at least 550°C.

4. Device according to any one of Claims 1 to 3, **characterised in that** the heat-retaining body (126, 126') comprises an adsorption material (128) which is not flammable.

5. Device according to any one of Claims 1 to 4, **characterised in that** the heat-retaining body (126, 126') comprises an adsorption material (128) which is substantially binder-free.

6. Device according to any one of Claims 1 to 5, **characterised in that** the heat-retaining body (126, 126') comprises an inorganic adsorption material (128), preferably mineral fibres, in particular silicate fibres.

7. Device according to any one of Claims 1 to 6, **characterised in that** the heat-retaining body (126, 126') comprises an adsorption material (128) with an adsorptive capacity for the heat-retaining liquid of at least 200 % of the self-weight of the adsorption material.

8. Device according to any one of Claims 1 to 7, **characterised in that** the heat-retaining body (126, 126') comprises an enclosure (130) of a fluid-tight material.

9. Device according to Claim 8, **characterised in that** the enclosure (130) comprises a halogen-free plastics material, preferably polyethylene.

10. Device according to any one of Claims 1 to 9, **characterised in that** the heat-retaining body (126, 126') comprises water as the heat-retaining liquid.

11. Device according to any one of Claims 1 to 10, **characterised in that** the device (100) comprises a closed container (102, 104) for holding the heat-retaining body (126, 126').

12. Device according to Claim 11, **characterised in that** the container (102) comprises a metallic material, preferably a nickel-chromium steel.

13. Device according to any one of Claims 11 and 12, **characterised in that** the container (102, 104) comprises an escape space (138, 147) into which the heat-retaining body (126, 126') can expand in the event of a change in volume.

14. Device according to any one of Claims 11 to 13, **characterised in that** the container (102, 104) comprises an interior space (110, 144) for holding the heat-retaining body (126, 126'), which space comprises a region (124) which tapers towards an edge of the container.

15. Device according to any one of Claims 1 to 14, **characterised in that** the device (100) comprises a partition (106, 140) which is disposed between the heat-retaining body (126, 126') and the product which is to be kept hot or cold.

16. Device according to Claim 15, **characterised in that** the partition comprises a metallic material, preferably a nickel-chromium steel.

17. Device according to any one of Claims 1 to 16, **characterised in that** the device (100) comprises a first element (102) with a holding region (148) for holding the product which is to be kept hot or cold and a second element (104) for sealing the holding region (148).

## Revendications

1. Dispositif destiné à maintenir les produits tempérés chauds ou froids, notamment les aliments et/ou boissons et comprenant un corps d'accumulation de chaleur (126, 126') comprenant lui-même un matériau d'adsorption (128) destiné au logement d'un liquide d'accumulation de chaleur, **caractérisé en ce que** le corps d'accumulation de chaleur (126, 126') comprend un matériau d'adsorption (128) sous forme d'un non-tissé ayant un pouvoir d'adsorption du liquide d'accumulation de chaleur de 150 % au minimum du poids propre du non-tissé.

2. Dispositif selon la revendication 1, **caractérisé en ce que** le corps d'accumulation de chaleur (126, 126') comprend un matériau d'adsorption (128) de forme flexible.

3. Dispositif selon l'une quelconque des revendications 1 ou 2, **caractérisé en ce que** le corps d'accumulation de chaleur (126, 126') comprend un matériau d'adsorption (128) dont la résistance à chaud atteint 200 °C au minimum, avantageusement 550 °C au minimum.

4. Dispositif selon l'une quelconque des revendications 1 à 3, **caractérisé en ce que** le corps d'accumulation de chaleur (126, 126') comprend un matériau d'adsorption (128) incombustible.

5. Dispositif selon l'une quelconque des revendications 1 à 4, **caractérisé en ce que** le corps d'accumulation de chaleur (126, 126') comprend un matériau d'adsorption (128) pour l'essentiel exempt de liants.

6. Dispositif selon l'une quelconque des revendications 1 à 5, **caractérisé en ce que** le corps d'accumulation de chaleur (126, 126') comprend un matériau d'adsorption (128) anorganique, avantageusement des fibres minérales, notamment des fibres de silicate.

7. Dispositif selon l'une quelconque des revendications 1 à 6, **caractérisé en ce que** le corps d'accumulation de chaleur (126, 126') comprend un matériau d'adsorption (128) ayant un pouvoir d'adsorption du liquide d'accumulation de chaleur de 200 % au moins du poids propre du matériau d'adsorption.

8. Dispositif selon l'une quelconque des revendications 1 à 7, **caractérisé en ce que** le corps d'accumulation de chaleur (126, 126') comprend une enveloppe (130) constituée d'un matériau étanche aux fluides.

9. Dispositif selon la revendication 8, **caractérisé en ce que** l'enveloppe (130) comprend un matériau en matière synthétique exempt d'halogène, avantageusement du polyéthylène.

10. Dispositif selon l'une quelconque des revendications 1 à 9, **caractérisé en ce que** le corps d'accumulation de chaleur (126, 126') comprend de l'eau comme liquide d'accumulation de chaleur.

11. Dispositif selon l'une quelconque des revendications 1 à 10, **caractérisé en ce que** le dispositif (100) comprend un récipient fermé (102, 104) destiné au logement du corps d'accumulation de chaleur (126, 126').

12. Dispositif selon la revendication 11, **caractérisé en ce que** le récipient (102) comprend un matériau métallique, avantageusement un acier au nickel-chrome.

13. Dispositif selon l'une quelconque des revendications 11 ou 12, **caractérisé en ce que** le récipient (102, 104) comprend un espace d'évitement (138, 147), dans lequel le corps d'accumulation de chaleur (126, 126') peut se dilater, dans le cas d'une modification du volume.

14. Dispositif selon l'une quelconque des revendications 11 à 13, **caractérisé en ce que** le récipient (102, 104) comporte une chambre interne (110, 144) destinée au logement du corps d'accumulation de chaleur (126, 126') comprenant une zone (124) s'amincissant en direction d'un bord du récipient.

15. Dispositif selon l'une quelconque des revendications 1 à 14, **caractérisé en ce que** le dispositif (100) comprend une cloison (106, 140) prévue entre le corps d'accumulation de chaleur (126, 126') et le produit tempéré.

16. Dispositif selon la revendication 15, **caractérisé en ce que** la cloison comprend un matériau métallique, avantageusement un acier au nickel-chrome.

17. Dispositif selon l'une quelconque des revendications 1 à 16, **caractérisé en ce que** le dispositif (100) comprend un premier élément (102) avec un espace de logement (148) du produit tempéré et un deuxième élément (104) destiné à fermer l'espace de logement (148).
